# EUROPÄISCHE PATENTSCHRIFT

(11) **EP 1 093 446 B1**
(45) Veröffentlichungstag und Bekanntmachung des Hinweises auf die Patenterteilung: **11.12.2002**
(21) Anmeldenummer: 99936310.4
(22) Anmeldetag: 21.05.1999
(51) Int. Cl.: C04B 28/00

(54) **DICHTWANDMASSE AUS EINEM AKTIVIERTEN TONMINERALPULVER MIT EINEM HYDRAULISCHEN BINDEMITTEL**
MATERIAL FOR IMPERVIOUS WALLS, CONSISTING OF AN ACTIVATED CLAY MINERAL POWDER WITH A HYDRAULIC BINDING AGENT
MATIERE POUR RIDEAU ETANCHE CONSTITUEE D'UNE POUDRE DE MINERAL ARGILEUX ACTIVEE ET D'UN LIANT HYDRAULIQUE

(30) Priorität: 22.05.1998 DE 19823045; 21.09.1998 DE 19843092
(43) Veröffentlichungstag der Anmeldung: 25.04.2001
(73) Patentinhaber: IKO Minerals GmbH, 45772 Marl (DE)
(72) Erfinder: Brenner, Bernd, 80686 München (DE)
(74) Vertreter: Honke, Manfred, Dr.-Ing.
(86) Internationale Anmeldenummer: DE9901535
(87) Internationale Veröffentlichungsnummer: WO99061386

(56) Entgegenhaltungen:
- EP-A- 0 522 347
- DE-A- 3 633 736
- US-A- 5 521 133
- BENTONIL CV15 Product information, 19-11-1996 Süd-Chemie AG, DE XP002122359
- TIXOTON Product information, 09-1996 Süd-Chemie AG, DE XP002122360

## Beschreibung

Die Erfindung betrifft eine Dichtwandmssse nach dem Hauptanspruch.

Eine solche Dichtwandmasse ist zum Beispiel mit einem zementstabilen Tonmineralpulver, das unter dem Hancelsnamen TIXOTON CV 15 der Fa. Südchemie, München, oder IBECO Bentonit CR 4 bzw. CT der Fa. IBECO, Mannheim, bekannt ist, herstellbar.

Zur Erzielung der Eigenschaft der Zementstabilität eines Tonmineralpulvers sind die Grundeigenschaften des Abbauminerals, die Verfahrensabläufe bei der Trocknung einschließlich Vermahlung und die Gemengebildung mit Hilfsstoffen entscheidend. Derzeit ist die Erzielung der Zementstabilität an relativ teure Bentonite bestimmter Fundstätten gebunden.

Die Trocknung des Ausgangsminerals erfolgt in bekannten Trocknungsverfahren, z.B. in Horden-, Etagen- oder Trommeltrocknern, zur Vermahlung werden Walzenschüssel-, Kugelmühlen, ggf. Kollergänge eingesetzt. Die ausgangsfeuchten smektitischen Tonen bestimmter üblicher Ausgangskörnung werden bei bestimmter Temperatur- und Durchsatzführung in einer Trockeneinrichtung durch Feuchteabfuhr auf eine bestimmte Endfeuchte auf dem Weg der Verdampfungstrocknung getrocknet.

Nichtzementstabile Bentonite NBF ergeben zusammen mit Zement praktisch keine stabile Suspension bestimmter Viskosität, Fließgrenze und Filtrationseigenschaften. Die Haupteigenschaften suspensionsstabiler Minerale, wie Bentonite, werden durch ihre Morphologie und Ladungsverteilung charakterisiert, wobei eine direkte Zuordnung dieser Eigenschaften zu ihren chemischen Bestandteilen nicht ohne weiteres gelingt, folglich die sicherste Analyse im empirischen Vorgehen mit Erproben im System liegt.

Zur Herstellung von Dichtwandmassen ist es gebräuchlich, Bentonit und Zement plus eventuell Zuschlägen, wie z.B. Steinmehl oder Adsorbentien, trockengemischt zu halten und zum Einsatz mit Wasser anzurühren (Komponentengemisch in Wasser- oder Einstufenverfahren ESTV). Alternativ werden Bentonit und Wasser vordispergiert, erst dann Zement eingerührt (Einkomponenten in Wasser- oder Zweistufenverfahren ZSTV).

Die im Dichtwandbau einschlägig eingesetzten Bentonite ZBF weisen qualitativ, insbesondere fundstättenmäßig, die oben dargelegte Zementstabilität auf.

Nichtzementstabile Bentonite NBF in Mischung mit jeweils verschiedenen Zementarten zeigen bekanntermaßen keinen einwandfreien Ablauf und entfallen bislang für die Dichtwandanwendung und zwar unabhängig von der generell zumischbaren Zementart. Herkömmliche zementstabile Bentonite ZBF beschränken sich in Mischung auf bestimmte geeignete Zemente. (F steht bei NBF und bei ZBF jeweils als Kürzel für Fundstätte.)

Die heutigen Zementarten von Bedeutung unterscheiden sich im wesentlichen im Anteil von Hüttensand/Hochofenschlacke. Für Dichtwandmassen schlecht geeignete Zemente sind solche mit niedrigem Anteil von Hüttensand (ca. 50 bis 60%) sowie Portlandklinker (ca. 30%), gut geeignete Zement sind solche mit mehr als 75% Hüttensand bei geringem, ca. 2-3%-igem Klinkeranteil. Nach dem Zementhandbuch ist der aus Zementklinker bestehende Portlandzement QA3 der am meisten hergestellte. Der speziell für Unterwasserabbindung abgestimmte Hochofenzement QA2, zum Beispiel HOZ 35 L, enthält über 60% Hochofenschlacke; beim Normzement Traßzement ist äquivalent zum Hüttensand Traß enthalten.

Der getrennt nicht gehandelte Zement QA1 mit Hochofenschlackenanteil von 20-80% für den einen Ansatz und von 30-60% für den anderen Ansatz in der Trockenmischung mit zementstabilem Bentonit ZBF wird gemäß DE 36 33 736 A1 zur Herstellung von Dichtwandmassen nach dem Einstufenverfahren ESTV eingesetzt. Für das Zweistufenverfahren ZSTV eignen sich der vorgenannte Zement QA1 nach DE 36 33 736 A1 sowie der Hochofenzement QA2, allerdings wiederum nur in Bezug auf die bekannten zementstabilen Bentonite ZBF. Ungeeignet stellen sich Portlandzement QA3 bei den Verfahren ESTV; ZSTV und Hochofenzement QA2 beim Verfahren ESTV dar.

Die der Erfindung zugrunde liegende Aufgabe bestand darin, eine Dichtwandmasse aus aufbereitetem Tonmineral mit verschiedenen Zementarten bereitzustellen. Die Aufgabe wird durch den Gegenstand des Hauptanspruchs gelöst. Die Unteransprüche geben Ausgestaltungen der erfindungsgemäßen Dichtwandmasse wieder.

Mit einem schockgetrockneten, speziell vermahlenen und dadurch mikroporös gewordenen Fein-/Feinstgrieß ZBFM aus lagerstättenbedingt zementstsbilem Bentonit ZBF können Dichtwandmassen mit eigentlich dafür nicht geeigneten Zementen, z.B. QA3, hergestellt werden. Der Feinstgrieß NBFM aus lagerstättenbedingt nichtzementstabilem Bentonit NBF wandelt sich zu einer Qualität, wie sie der lagerstättenbedingt zementstabile Bentonit ZBF ursprünglich aufweist. (M steht jeweils als Kürzel für Mikroporosität.)

Der angewendete mikroporöse Feingrieß ZBFM, NBFM weist in der Trockenmischung mit Zement eine Lagerstabilität auf, bei der von mindestens sieben Tagen ausgegangen werden kann, wobei unterhalb von ca. 30 Tagen auch keine Werteveränderung eintritt. Der Grieß zeichnet sich dadurch aus, daß das Partikel mit seiner geringen Oberfläche wenig Angriff für den reaktiven Zement bietet und die innere Oberfläche aufgrund großer Mikroporosität schnellen Dispergierablauf gewährleistet.

Als Vorteil der zugrundeliegenden Aufbereitung des Feingrießes ZBFM, NBFM zeigt sich, daß die Schnittverhältnisse hoch liegen, d.h. die Grießfraktion einen hohen Massenanteil erreicht, jedoch eng verteilt bleibt. Der Feingrieß weist günstige Eigenschaften auf hinsichtlich seiner Quelleigenschaften, leichten Dispergierbarkeit, was die Aufteilung in die Primärteilchen des Tones in Wasser betrifft, hohes Adsorptionsvermögen, Pulverfluidität und Lagerstabilität.

Für den Vermahlungsprozeß gelten:
Eingangskörnung ca. 5-20 mm;
Grießkorn nach Vermahlung ca. 0,025-0,1 mm.

Die Dichte des herstellungsgemäßen Grießes beträgt ca. 900 bis 1200 kg/m³. Der Wassergehalt beläuft sich auf 7-12%. Für den Na₂O-Gehalt gelten 0,5-3,5%. Die angegebenen Bereiche sind Nennbereiche, engere Bereichswerte sind jeweils eingeschlossen, ebenso sind Werte außerhalb der Bereichsgrenzen z.B. durch geeignete verfahrenstechnische Maßnahmen realisierbar.

Der Trocknungsprozeß für das Feinmineral ZBFM, NBFM wird mit hoher Trockengeschwindigkeit, vergleichbar mit einer Schocktrocknung, geführt, wobei im wesentlichen folgende Parameterwerte zugrundezulegen sind:
- Eingangswert Gruben, -Lagerfeuchte 30-42%;
- Restfeuchte 16-22%;
- Verdampfungsleistung min. 0,2 kg Wasser/(kg Bentonit und min);
- bei Gleichstromtrocknung Eingangstemperatur ca. ab 300-700°C (Trommeltrockner);
- bei Mühlentrocknung ab 40 bis ca. 110°C bei hoher Luftmenge,
- bei Querstromtrocknung ab 100-300°C;
- Ausgangstemperatur kleiner/gleich 85°C.

Die innere Guttemperatur soll möglichst 60°C für längere Zeit nicht überschreiten, um irreversible Veränderungen in der Morphologie des Minerals zu vermeiden.

Vermahlung und Trocknung können sowohl in einer geeigneten Mühle, z.B. einer Ultrarotormühle, kombiniert als auch stufig durchgeführt werden. Die Verweilzeit in der Mühle ist kürzest einzustellen, so daß die gewünschte Mahlfeinheit ohne zu lange Einwirkung auf das Partikel erreicht wird, was einen niederen Kreislauffaktor impliziert. Eine Pulverfeinheit, die in der Größenordnung der Mikroporosität liegt, ist auch wegen der Gefahr der Übertrocknung bei gleichzeitiger Morphologiezerstörung zu vermeiden. Bei zweistufiger Trocknungsführung/Trockenmahlungsführung ist eine übertrocknung in der vorgeschalteten Trocknungsstufe aus den vorgenannten Gründen ebenfalls zu vermeiden. Die Minimalfeuchtigkeit vor Eintritt in die Mahltrocknung sollte 16% nicht unterschreiten. (Sämtliche Angaben von Feuchtigkeitswerten beziehen sich nach DIN bezüglich Ofentrocknung bei 105°C bis Gewichtskonstanz.)

Die obigen Werte sind selbstverständlich bedingt variierbar.

Der Nachweis der Mikroporosität stützt sich praktisch auf die Oberfläche, hat jedoch theoretisch Gültigkeit für das ganze Korn.

Üblicherweise wird das Mahlgut durch Sichtung in oder direkt nach der Mühle aufgetrennt in den Anteil mit gewünschter Kornfeinheit und das noch zu grobe, wieder rückzuführende Material. Dadurch befindet sich letzeres in einem unbestimmt langen Kreislauf. Bei einem dem Mahlvorgang überlagerten Trocknungsvorgang wird das zirkulierende Material übermäßig getrocknet, was bei smektitischen Tonen zur Folge hat, daß diese übertrocknete Teilfraktion nicht mehr genügend in Wasser dispergierbar/benetzbar ist und in den wichtigsten Anwendungsgebieten untauglich wird.

Bei Führung in der Ultrarotormühle wird das Material aufgesplittet, und das grobe, ansonsten rezirkulierende Material der Nutzfraktion zugeordnet, siehe die Grobfraktion bis 0,1 mm.

Drehzahl, Anzahl und Ausbildung der Mahlkörper zusammen mit den Mahlbahneigenheiten bestimmen den Schnitt. Es ist das Ziel, grobes Spritzkorn zu vermeiden, das der Wiedervermahlung im Kreislauf bedarf.

Das dargestellte Feinmineralpulver ZBFM ist herstellablauffähig für Dichtwandmassen bezüglich der Zementarten QA1, QA2 im Einstufen (ESTV)- sowie im Zweistufenverfahren (ZSTV), die Gängigkeit liegt auch für Portlandzement, Zementart QA3, im Zweistufenverfahren vor. Feinmineralpulver NBFM, aus fundstättenbedingt nichtzementstabilem Bentonit NBF gewonnen, eignet sich wie ein herkömmlich zementstabiler Bentonit ZBF für den Dichtwandbau, wie oben im Zusammenhang mit den Mischverfahren und Zementarten für den Stand der Technik dargelegt. Die Bentonitqualität NBF wird somit auf die Verarbeitungsstufe ZBF in Form des ZBFM gehoben.

Das dargestellte Feinmaterialpulver ZBFM, NBFM eignet sich zur Zementvergütung bei Estrich- und Spritzbeton.

Es folgt eine Darstellung des erfindungsgemäßen Dichtmasse mit dem hierfür aufbereiteten Tonmineralpulver anhand von Meßprotokollen. Es zeigen:
- Tab. 1: Kennwerte zur Zementstabilität verschiedener Proben;
- Tab. 2: Kennwerte über Suspensionseigenschaften von in Wasser dispergierten Proben bezüglich des Zeitverlaufes;
- Tab. 3: Kennwerte wie Tab. 2, jedoch bezüglich Trocknungsverfahrens;
- Figur 1: Partikelgrößenverteilungsanalyse von handelsüblichem Bentonit;
- Figur 2: wie Figur 1, jedoch von erfindungsgemäßem Bentonit.

In Tab. 1 geben die jeweils mit B1 bzw. B2 bezeichneten Zeilen Meßwerte für die Rheologie von Dichtwandmassen an, die sofort nach Trockenmischen von Zement und Bentonit mit Wasser hergestellt werden, im Vergleich zu Trockenmischungen, die vor Herstellung der Dichtwandmasse sieben Tage trocken gelagert waren. Die Zeile B1 bezieht sich auf den erfindungsgemäß hergestellten Bentonit J27, B2 hingegen auf dasselbe Ausgangsmaterial J29, das auf denselben Maschinen, jedoch in herkömmlicher Verfahrensweise, hergestellt wurde. Das Material J27 zeigt beim Vergleich der Werte in den Spalten unter "Sofort" und "7d" nahezu unveränderte Werte, was die erhöhte Lagerstabilität beweist. Das Material J29 erreicht nicht die geforderte Verarbeitungsviskosität, siehe Marsh-Zahl und Fließgrenze, und verliert sogar durch Lagerung sein ursprüngliches Viskositätsniveau.

Tab. 2 ist ähnlich wie Tab. 1 aufgebaut. Sie bezieht sich jedoch auf die Rheologie des Tonmaterials in Wasser dispergiert ohne Zement. Die Zeile C1 gibt die Verhältnisse vom herkömmlich fein vermahlenen, schockgetrockneten, die Zeile C2 demgegenüber vom erfindungsgemäßen, jedoch grob vermahlenen und schockgetrockneten Tonmaterial wieder. Laut Zeile C2 wird ersichtlich, daß die Grießfraktion mikroporös ist, weil die zeitliche Entwicklung der Suspensionsrheologie von "Sofort" über "1h" nach "24h" im Vergleich zu den Werten in Zeile C2 die gleiche, sogar etwas höhere Geschwindigkeit zeigt. Zu erwarten wäre nämlich, daß bei Material nach Zeile C2 eine verzögerte Entwicklung der Suspensionsrheologie abläuft.

Tab. 3 enthält dieselbe Darstellung wie Tab. 2 bezüglich der zeitlichen Entwicklung der Suspensionsrheologie, wobei Zeile D1 das normal getrocknete und gemahlene Material und Zeile D2 das erfindungsgemäße Material betrifft. Unter normal getrocknet und gemahlen ist Vortrocknung bis herunter auf 14% Feuchte und Mahltrocknung auf einer Walzenschüsselmühle bis 8% Restfeuchte zu verstehen. Aus Zeile D1 geht hervor, daß das Material als Schlitzwandbentonit nicht verwendbar ist, während das Material gemäß Zeile D2 ausgezeichnete, sehr hohe rheologische Werte zeigt, die gewöhnlich nur mit teuren ausgesuchten Bentoniten oder mittels Zuschlägen erzielbar sind.

Die Diagramme 1, 2 sind gleich aufgebaut. Sie enthalten jeweils eine Liste der untersuchten Korngrößendurchmesser X0/mym gegenüber ihrem Anteil Q3 in Prozent am Gesamtvolumen aller Kornanteile. Diese Liste ist Basis für die Summenkurve der Volumenverteilung sowie Häufigkeitsverteilung der Korndurchmesser.

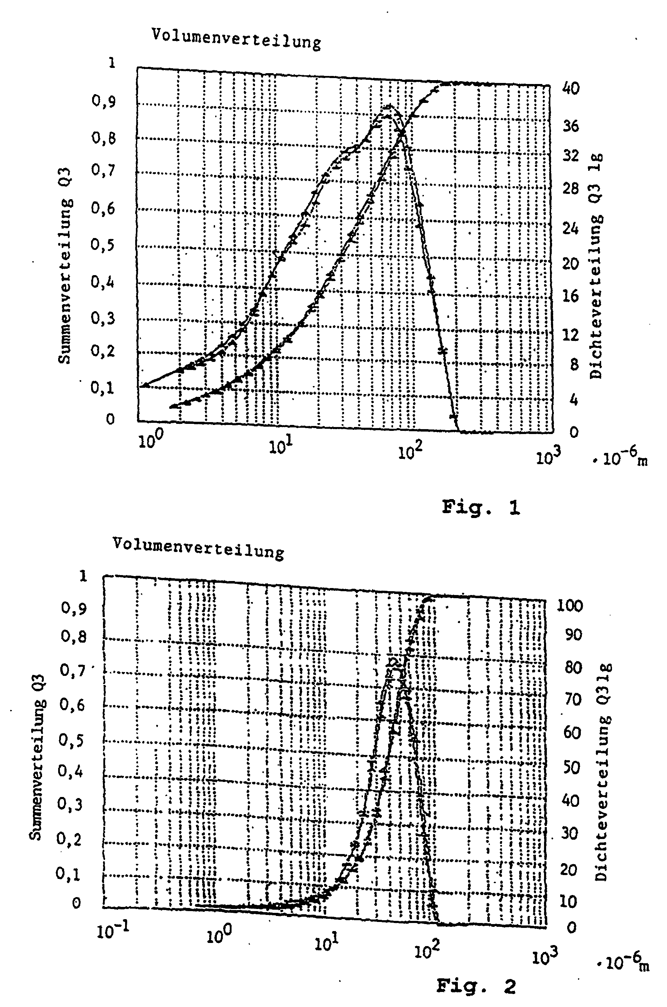

Beim Vergleich der Diagramme 1 und 2 ist erkennbar, daß handelsüblicher Bentonit, siehe Diagramm 1, in der Korngröße breiter verteilt ist und einen hohen Feinanteil enthält, während das erfindungsgemäße Material, siehe Figur 2, im wesentlichen ohne Feinanteil eng verteilt mit einem Maximum bei 0,06 mm beschaffen ist. Aus Zeile Al/Erläute zu Fig. 1 bzw. Zeile A2/Erläuterung zu Fig. 2 sind Werte zur spezifischen Oberfläche pro Kornvolumen entnehmbar. Dabei zeigt sich die unterschiedliche Feinheit im Wert 0,63 m²/cm³, siehe Zeile A1, gegenüber dem Wert von 0,36 m²/cm³, siehe Zeile A2.

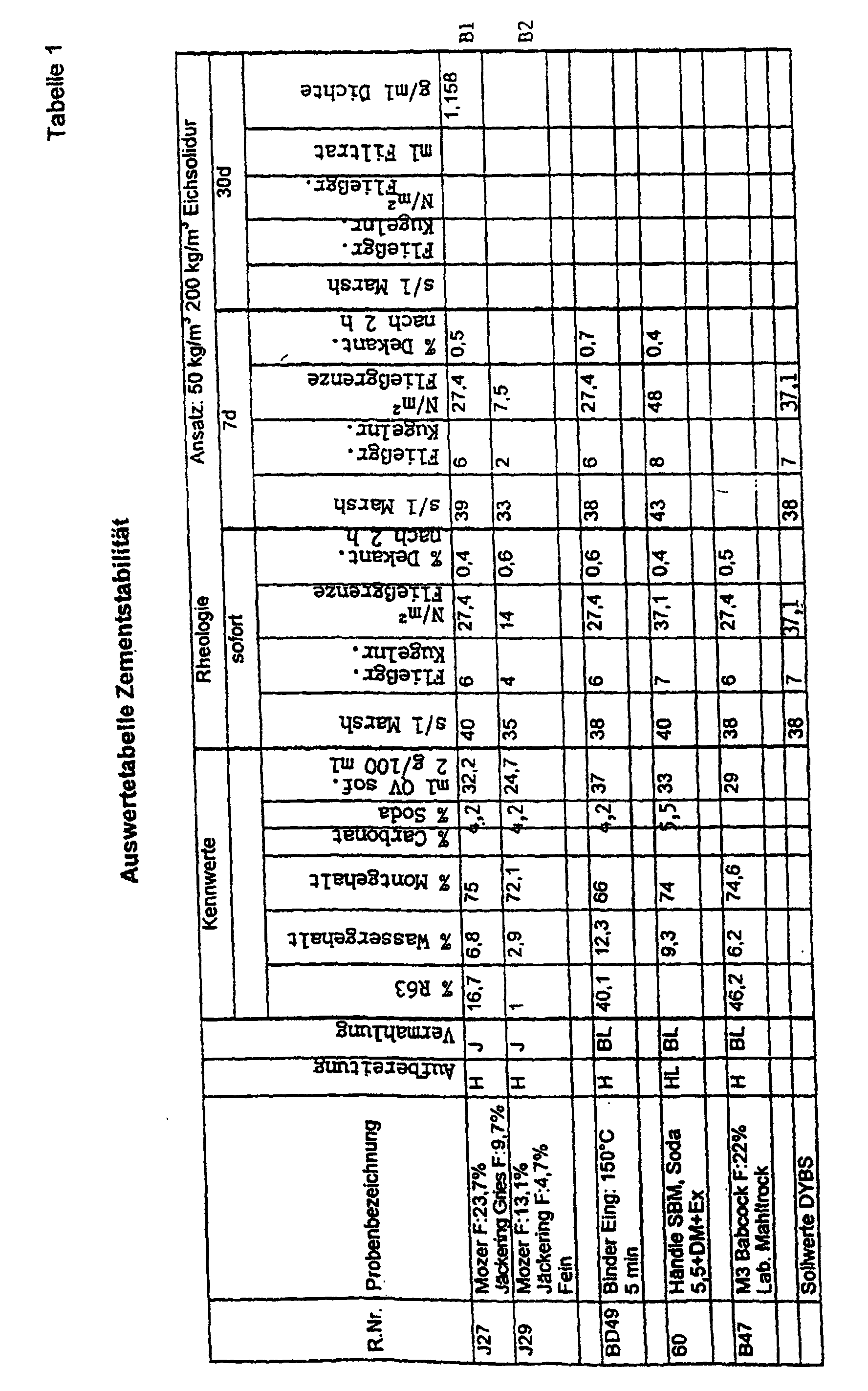

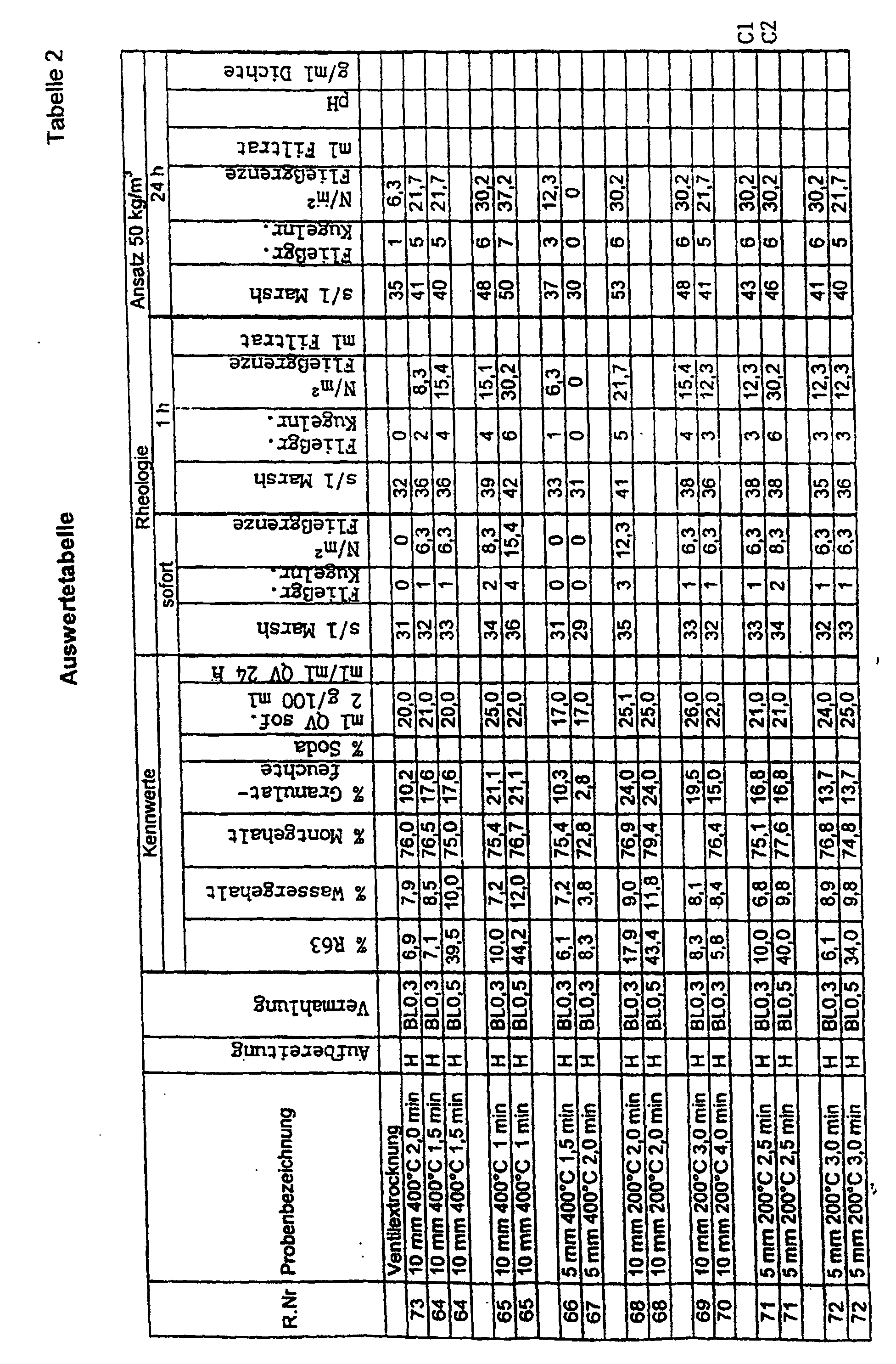

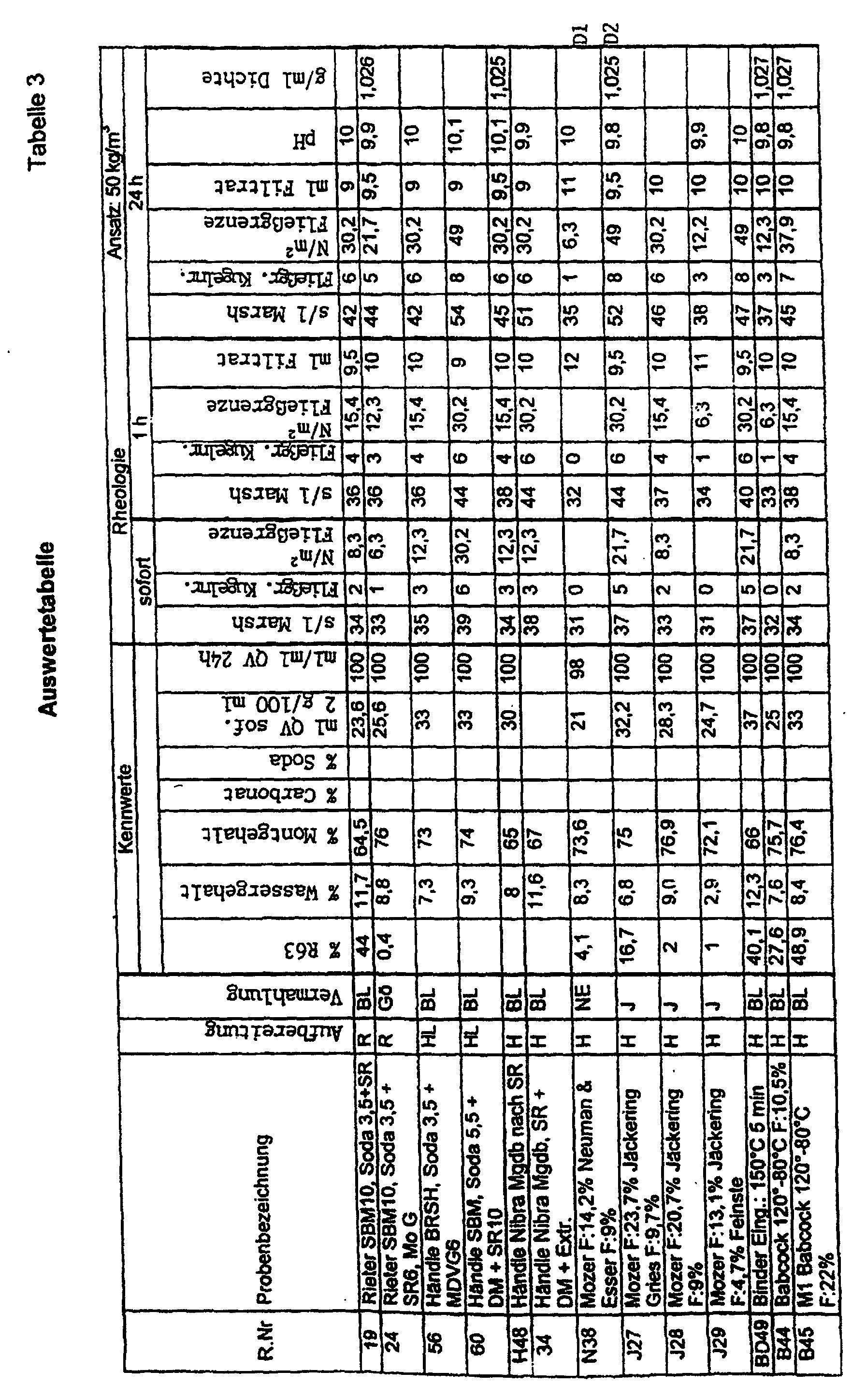

Erläuterung zu Fig. 1:

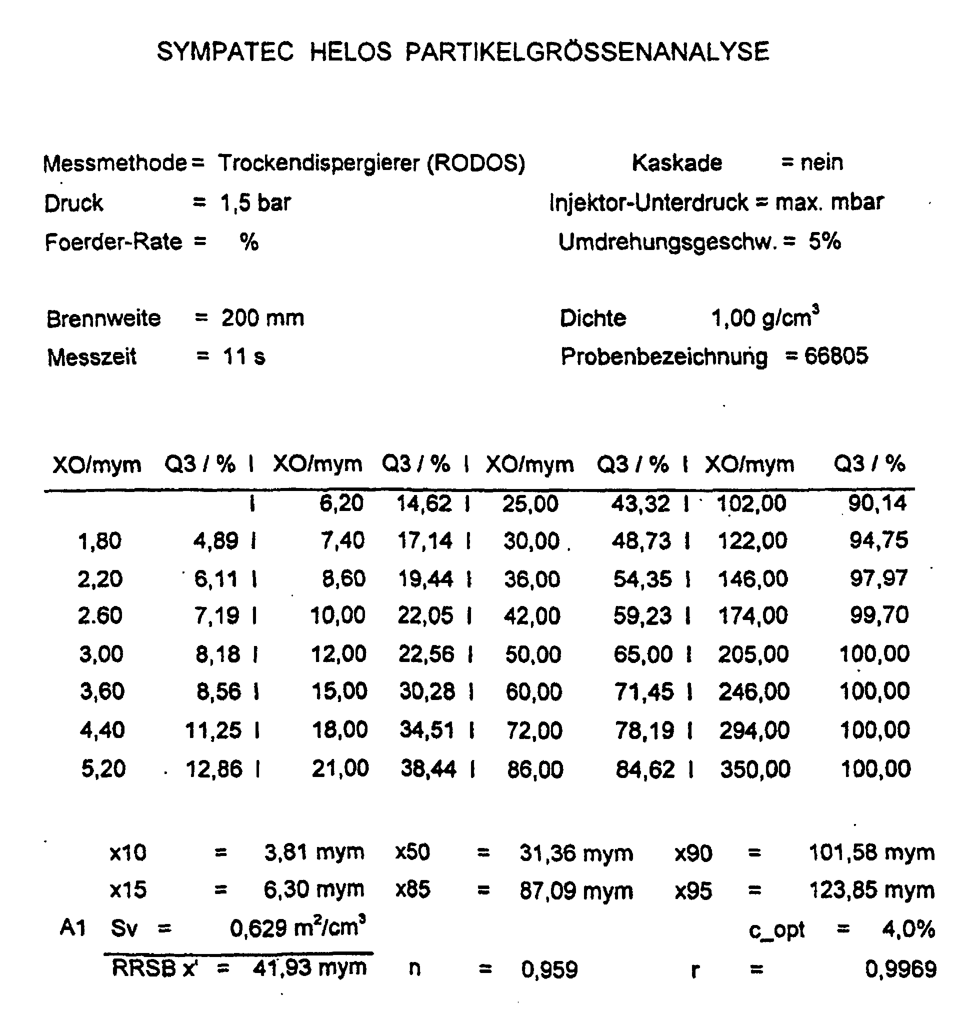

Erläuterung zu Fig. 2:

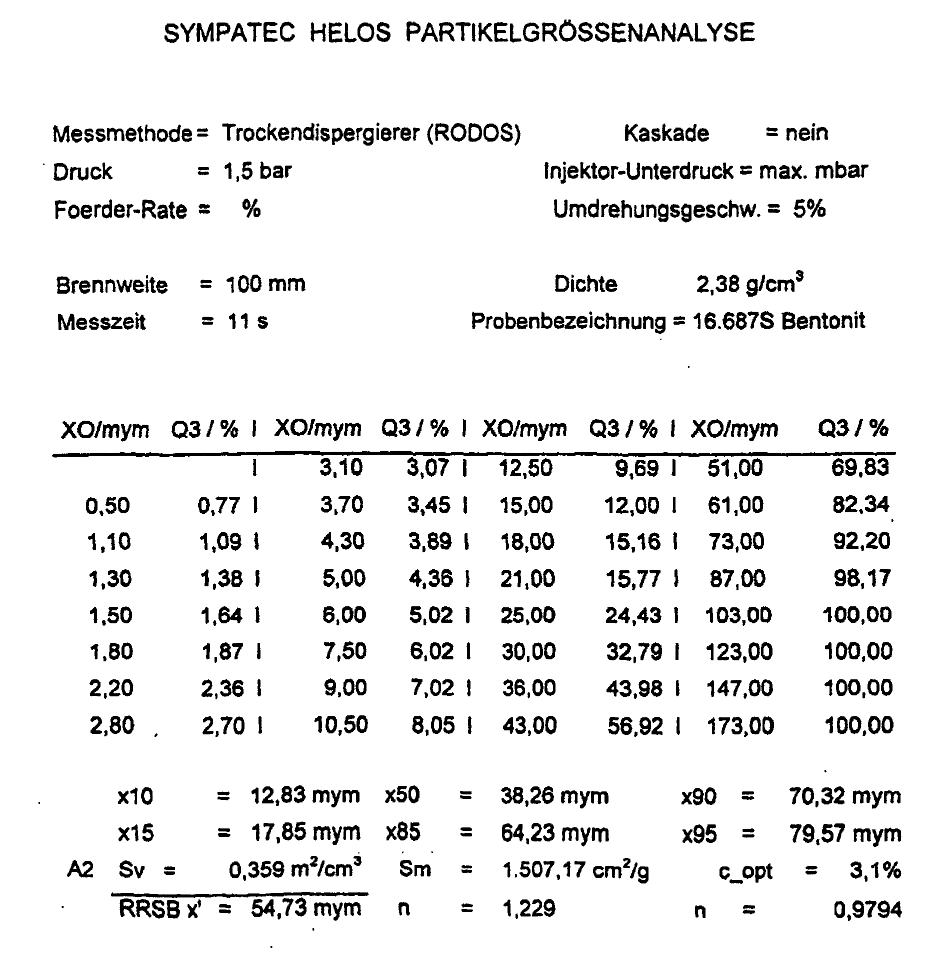

## Patentansprüche

1. Dichtwandmasse, herstellbar, indem
- ein lagerstättenbedingt zementsuspensionsstabiler oder lagerstättenbedingt nichtzementsuspensionsstabiler Bentonit durch Schocktrocknung in mikroporösen Zustand verbracht und gemahlen wird, so dass ein Feingrieß entsteht, der
einen Korngrößenbereich bis 0,1 mm,
eine Dichte von 900 bis 1200 kg/m³,
einen Wassergehalt von 7 bis 12 Gew.-%,
einen Na₂O-Gehalt von 0,5 bis 3,5 Gew.-% und
eine spezifische Oberfläche pro Kornvolumen von 0,25 bis 0,5 m²/cm³ aufweist,
und der Feingrieß
- entweder in einem Einstufenverfahren mit Zement gemischt,
der einen Portlandzementklinkeranteil
sowie einen Hüttensand- und/oder Hochofenschlacken- oder Traßanteil aufweist,
und mit Wasser angerührt wird,
- oder in einem Zweistufenverfahren mit Wasser vordispergiert und erst dann der genannte Zement oder ein Portlandzement eingerührt wird.

2. Dichtwandmasse nach Anspruch 1, herstellbar aus einem Feingrieß, der einen Korngrößenbereich von 0,02 bis 0,1 mm aufweist.

## Claims

1. A sealing wall material, producible in that
- a bentonite stable in cement suspension, conditional upon the deposit, or not stable in cement suspension, conditional upon the deposit, is brought into a micro-porous state by shock drying and ground, so that a fine grit arises, which exhibits
a grain size range up to 0.1 mm,
a density from 900 to 1200 kg/m³,
a water content from 7 to 12 wt.%,
an Na₂O content from 0.5 to 3.5 wt.% and
a specific surface per grain volume from 0.25 to 0.5 m²/cm³,
and the fine grit
- is either mixed in a single-stage process with cement,
which has a Portland cement clinker fraction
and a slag sand and/or blast furnace slag or trass fraction,
and stirred with water,
- or, in a two-stage process, is previously dispersed with water and the aforementioned cement or a Portland cement is only then stirred in.

2. The sealing wall material according to claim 1, producible from a fine grit, which exhibits a grain size range from 0.02 to 0.1 mm.

## Revendications

1. Masse murale dense à fabriquer, dans laquelle
- une bentonite stable en suspension de ciment en fonction du gisement ou une bentonite non stable en suspension de ciment en fonction du gisement est transformée en état microporeux par séchage sous vibrations et est moulue de manière à obtenir une semoule qui présente
une fourchette de granulométrie allant jusqu'à 0,1 mm,
une densité de 900 à 1200 kg/m³,
une teneur en eau de 7 à 12 % en poids,
une teneur en Na²-O de 0,5 à 3,5 % en poids et
une surface spécifique par volume de grain de 0,25 à 0,5 m²/cm³,
et que la semoule
- soit est mêlée en un processus en une seule étape à du ciment qui
présente une proportion de clinker de ciment Portland
ainsi qu'une proportion de laitier granulé et/ou scories de haut-fourneau ou de trass,
et est mélangée à de l'eau,
- soit est, en un processus en deux étapes, pré-dispersée avec de l'eau et ensuite seulement mélangée audit ciment ou à un ciment Portland.

2. Masse murale dense selon la revendication 1, à fabriquer à partir d'une semoule qui présente une fourchette de granulométrie de 0,02 à 0,1 mm.
